# EUROPEAN PATENT APPLICATION

(11) **EP 4 761 140 A1**
(43) Date of publication of application: **17.06.2026**
(21) Application number: 24219434.8
(22) Date of filing: 12.12.2024
(51) Int. Cl.: H04B 10/079, H04B 10/27, H04J 14/02

(54) **METHOD FOR OPERATING AN OPTICAL PROTECTION ELEMENT AND/OR FOR PROTECTING AN OPTICAL NETWORK, OPTICAL PROTECTION ELEMENT, OPTICAL DISTRIBUTION NETWORK AND VARIABLE OPTICAL PROTECTOR**

(71) Applicant: Deutsche Telekom AG, 53113 Bonn (DE)
(72) Inventor: HAAG, Thomas, 63110 Rodgau (DE); WEIERSHAUSEN, Werner, 64859 Eppertshausen (DE)
(74) Representative: Schwöbel, Thilo K.

(57) **Abstract**

The invention relates to a method for operating an optical protection element and/or for protecting an optical network, especially an optical distribution network as part of a telecommunications network, by means of the optical protection element,
wherein the optical protection element is configured to protect the optical distribution network on a first side of the optical protection element, at least in part, from inappropriate input signals arriving from a second side, opposite the first side, of the optical protection element, wherein inappropriate input signals comprise optical signals having an optical input power exceeding a threshold value and/or optical signals outside of a predefined optical spectral range,
wherein the optical protection element comprises an optical power detector on the second side of the optical protection element as well as a variable optical protector being configured to be switched between at least a first and a second mode of operation, the first mode of operation being a transmission mode of operation allowing the transmission of optical signals for the optical distribution network being operatively used, and the second mode of operation being an optical protection mode of operation,
wherein, in order to operate the optical protection element and/or to protect the optical distribution network from inappropriate input signals, the method comprises the following steps:
-- in a first step, and while the variable optical protector being in its first mode of operation, the optical power detector detects an inappropriate input signal,
-- in a second step, the variable optical protector is switched to its second mode of operation,
-- in a third step, the variable optical protector is triggered to be switched to its first mode of operation.

## Description

### BACKGROUND

The present invention relates a method for operating an optical protection element and/or for protecting an optical distribution network, especially an optical distribution network as part of a telecommunications network, by means of the optical protection element, wherein the optical protection element is configured to protect the optical distribution network on a first side of the optical protection element, at least in part, from inappropriate input signals arriving from a second side, opposite the first side, of the optical protection element, wherein inappropriate input signals comprise optical signals having an optical input power exceeding a threshold value and/or optical signals outside of a predefined optical spectral range.

Furthermore, the present invention relates to an optical protection element for being operated and/or for protecting an optical distribution network, especially an optical distribution network as part of a telecommunications network, wherein the optical protection element is configured to protect the optical distribution network on a first side of the optical protection element, at least in part, from inappropriate input signals arriving from a second side, opposite the first side, of the optical protection element, wherein inappropriate input signals comprise optical signals having an optical input power exceeding a threshold value and/or optical signals outside of a predefined optical spectral range.

Additionally, the present invention relates to an optical distribution network comprising an optical protection element according to the present invention.

Additionally, the present invention relates to a variable optical protector as part of an optical protection element according to the present invention.

The exchange of information in broadband communication systems or telecommunications networks, both in fixed-line and wireless communication systems (or fixed-line communication networks and mobile communication networks) has already grown dramatically and probably will also grow in the future due to the rapid spread of different data services in such communication networks.

In conventionally known or current telecommunications networks, typically having or comprising broadband access networks and/or aggregation networks, it is possible to connect many end-users or subscribers by means of using optical distribution networks in order to provide communication services and/or IP connectivity.

Typically in such broadband access networks, end-users or subscribers operate customer premises equipments or home gateway devices in order to establish a (mostly wireline) connection to access nodes of the broadband access network, typically as part of or located at a central office point of delivery. In case of optical distribution networks being used to connect end-users or subscribers to the broadband access network, such customer premises equipments or home gateway devices are typically realized as (or such customer premises equipments or home gateway devices typically comprise or are associated with) optical network terminals (ONT). Such optical network terminals typically terminate the optical distribution network from (or at) the subscriber or end-user side (hereinafter also called downlink side).

Furthermore such optical distribution networks, especially in case of passive optical networks (PON), typically comprise (at an uplink side thereof) an optical line terminal (OLT) that is serving the optical distribution network and all end-users or subscribers that are connected via the considered optical distribution network in a manner such that downlink traffic is able to be transported in downlink direction (from the optical line terminal towards one or a plurality of end-users or subscribers, i.e. optical network terminals) using the optical distribution network. In such a setup, typically, the optical distribution network also comprises one or a plurality of splitter entities between the optical line terminal and at least a part of the optical network terminals. In this respect, a splitter entity especially corresponds to a passive splitter, i.e. a passive optical element, that typically branches a single optical fiber into multiple fibers. Those multiple fibers can each serve multiple sites in downlink direction from the splitter entity. Those downlink sites typically correspond to either further splitter entities (then of a different (higher order) layer) or customer sites, i.e. optical network terminals; of course, it is possible that a part of the multiple fibers (i.e., typically, a certain first number of such fibers) branching off from one considered splitter entity connect further splitter entities, and another part of such multiple fibers (i.e. a certain second number of such fibers) connect customer sites.

In addition to the downlink traffic, also the uplink traffic (i.e. in uplink direction - from an optical network terminal, respectively, towards the optical line terminal) is transported by such an optical distribution network, requiring the respective optical network terminal of (or related to) a considered end-user or subscriber to inject optical signals into the optical distribution network in uplink direction.

Especially in case that the network provider or network operator is not able (or not allowed) to control which optical network terminal (or which type thereof) is able to be used (or to prescribe which optical network terminal (or which type thereof) is required to be used) by the respective end-users or subscribers, the optical distribution network and its components, especially the splitter entity or entities and/or the optical line terminal, is at risk of being damaged and/or disturbed by inappropriate input signals fed into the optical distribution network (in uplink direction) by an optical network terminal. Inappropriate input signals comprise optical signals having an optical input power exceeding a threshold value and/or optical signals outside of a predefined optical spectral range.

### SUMMARY

An object of the present invention is to provide a technically simple, effective and cost effective solution for operating an optical protection element and/or for protecting an optical distribution network, and its components (such as an optical line terminal as well as one or a plurality of optical splitter entities), as part of a telecommunications network, in a manner such that the optical distribution network as well as its components are at least better protected from inappropriate input signals. A further object of the present invention is to provide a corresponding optical protection element for being operated and/or for protecting an optical distribution network as part of a telecommunications network, as well as an optical distribution network comprising an optical protection element and a variable optical protector as part of the optical protection element.

The object of the present invention is achieved by a method for operating an optical protection element and/or for protecting an optical distribution network, especially an optical distribution network as part of a telecommunications network, by means of the optical protection element,
wherein the optical protection element is configured to protect the optical distribution network on a first side of the optical protection element, at least in part, from inappropriate input signals arriving from a second side, opposite the first side, of the optical protection element, wherein inappropriate input signals comprise optical signals having an optical input power exceeding a threshold value and/or optical signals outside of a predefined optical spectral range,
wherein the optical protection element comprises an optical power detector on the second side of the optical protection element as well as a variable optical protector being configured to be switched between at least a first and a second mode of operation, the first mode of operation being a transmission mode of operation allowing the transmission of optical signals for the optical distribution network being operatively used, and the second mode of operation being an optical protection mode of operation,
wherein, in order to operate the optical protection element and/or to protect the optical distribution network from inappropriate input signals, the method comprises the following steps:
   -- in a first step, and while the variable optical protector being in its first mode of operation, the optical power detector detects an inappropriate input signal,
   -- in a second step, the variable optical protector is switched to its second mode of operation,
   -- in a third step, the variable optical protector is triggered to be switched to its first mode of operation.

It is thereby advantageously possible according to the present invention to prevent damage and/or disturbance - in the optical distribution network and/or its components - that results from inappropriate input signals being fed into the optical distribution network (either by an attacker consciously aiming to attack the optical distribution network infrastructure, or a presumed attacker erroneously feeding in an incorrect optical signal).
In addition to that, it is furthermore advantageously possible according to the present invention that this protection (or prevention of damage and/or disturbance) is possible without generating too much of collateral damage, i.e. damage or inconvenience to other customers or end-users that also use the considered optical distribution network, e.g. caused by shutting down the optical distribution network entirely, or at least parts thereof that are much larger than necessarily required in view of the extent of the attack.

According to the present invention, a method for operating and optical protection element and/or for protecting an optical distribution network as part of a telecommunications network is provided.

Especially, the optical distribution network corresponds - basically and in principle - to an optical network that is commonly known, e.g. a passive optical network (PON), for example XGS-PON (10 Gigabit symmetrical passive optical network). In these passive optical networks, the relation between the optical network terminal and the optical line terminal is essential.
For example, it is conceivable according to the present invention (but not necessarily the case, i.e. not mandatory), that - within a passive optical network tree, or optical distribution network - sharing of the transmission capacity of the optical transmission fiber (i.e. used as a shared medium) works, especially in downlink direction, on a frame-based level; i.e. a transmission channel is defined, e.g., by means of an identifier information of the optical network terminal (ONT ID). In such a situation, due to the passive nature of the PON tree infrastructure of the optical distribution network (typically comprising splitter entities), at all end points of the optical distribution network (or PON tree), that means at all optical network terminals, the same signal is terminated and all channels are available. Then, a dedicated (considered) optical network terminal (controlled by the optical line terminal) only selects the relevant channel (or channels) even that all channels are available or present.
In addition, also the uplink traffic (i.e. in uplink direction - from an optical network terminal, respectively, towards the optical line terminal) is transported by such an optical distribution network, and especially (but not necessarily) the same optical fiber (as the one used for downlink traffic) is also used for the uplink traffic; this requires the respective optical network terminal of (or related to) a considered end-user or subscriber to inject optical signals into the (especially single operatively used optical fiber of the) optical distribution network in uplink direction.
Hence, in case that the possibility is required that arbitrary hardware of optical network terminals should be able to be used (and, thus, the network provider or network operator is not able or not allowed to control which optical network terminal (or which type thereof) is used with the optical distribution network, there is the risk that inappropriate input signals might damage and/or disturb the optical distribution network and/or its components, especially the splitter entity or entities and/or the optical line terminal.
In conventionally known passive optical networks or optical distribution networks, such damage and/or disturbance can only be detected at passive optical network tree level (i.e. by the optical line terminal), and, especially, not per optical network terminal device.

Inappropriate input signals might comprise optical signals that have an optical input power that is exceeding a certain - typically at least roughly predetermined - threshold value and/or optical signals that are outside of a predefined (or allowed) optical spectral range.

According to the present invention, the optical distribution network comprises an optical line terminal, at least one optical protection element (typically located at one or a plurality of optical splitter entities) as well as a plurality of optical network terminals. The optical distribution network provides, typically, (at least) a connection, on the one hand, between the optical line terminal and a splitter entity, and, on the other hand, between the splitter entity and both a first optical network terminal and a second optical network terminal.
Additionally according to the present invention, the optical distribution network comprises at least one optical protection element, the optical protection element being positioned between the optical line terminal and at least one of the optical network terminals - especially the optical protection element might be positioned on the uplink (facing) side of the specific splitter entity (or the splitter functionality thereof), or, alternatively, on the downlink (facing) side of the specific splitter entity (or the splitter functionality thereof). Furthermore, the optical protection element is configured to protect the optical distribution network on a first side of the optical protection element, at least in part, from inappropriate input signals arriving from a second side, opposite the first side, of the optical protection element, wherein inappropriate input signals comprise optical signals having an optical input power exceeding a threshold value and/or optical signals outside of a predefined optical spectral range.
According to the present invention, this protection is realized by means of the optical protection element comprising an optical power detector and a variable optical protector. The optical power detector (located on the second side of the optical protection element) is typically realized as a comparatively large-band power detector, thus able to detect an overall input power that exceeds a total input power above a threshold value and regarding a comparatively large spectral range; however, alternatively or cumulatively, the optical power detector might also be realized as (or comprise) one comparatively small band power detector or a plurality of such small band power detectors, especially each covering a different spectral range.
Furthermore according to the present invention, the variable optical protector (and, hence, the respective optical protection element) is configured to be switched between at least a first and a second mode of operation.
The first mode of operation is a transmission mode of operation allowing the transmission of optical signals - at least the ones for which the optical distribution network is operatively used, but, according to an additional preferred embodiment, also for additional spectral ranges (especially adjacent to the operatively used spectral range, or distinct (or separated) thereof). The second mode of operation is an optical protection mode of operation, i.e. in the second mode of operation of the variable optical protector acts such that at least a part of the spectral range for which it is transmissive in its first mode of operation, is either more or less completely blocked or, at least, attenuated such that the optical distribution network is protected and especially damage of optical elements in the uplink path or direction of the respective optical network terminal or splitter entity is avoided.

Additionally according to the present invention, in order to operate the optical protection element and/or to protect the optical distribution network from inappropriate input signals, the method comprises the steps of:
-- in a first step, and while the variable optical protector being in its first mode of operation, the optical power detector detects an inappropriate input signal,
-- in a second step, the variable optical protector is switched to its second mode of operation,
-- in a third step, the variable optical protector is triggered to be switched to its first mode of operation.

This advantageously provides the possibility - in case of an attack or a presumed attack - to quickly react, i.e. protect, the optical distribution network and/or its components or parts by means of switching the variable optical protector to its second mode of operation upon the optical power detector detecting an input signal being detected as inappropriate. This advantageously means that, in order to protect the optical distribution network, at least partly (and, especially, precisely where the (presumed) attack occurs), there is no need for the optical line terminal to necessarily interfere, or to control the protection of the optical distribution network (and, possibly, thereby allowing the damage (and/or disturbance) to be increased as the inappropriate input signal would need to be received by the optical line terminal).

Especially according to the present invention, a solution is provided to introduce and steer optical protection elements (comprising variable optical protectors), especially on different layers of the optical distribution network (i.e. a solution to introduce and steer cascaded filters), in order to prevent attacks, e.g. by injection - upstream, i.e. in uplink direction - of optical spectrum (optical power transients e.g. by lasers) towards the optical line terminal or access facing ports. Such attacks may disturb the concerned optical distribution network or passive optical network tree or might even destroy interfaces.

Furthermore, it is advantageously possible and preferred according to the present invention that the variable optical protector is configured to be switched to its first mode of operation by means of at least one out of the following:
-- upon reception, by the optical protection element, of a reset signal,
-- after a predetermined time interval or timer having elapsed, wherein especially a timer or time interval information relating to, or indicating, the time interval or the timer being either stored by the optical protection element or received by the optical protection element,
-- by means of a signal of the optical power detector indicating the absence of inappropriate input signals, especially the absence of inappropriate input signals during at least a predetermined period of time.

By means of the variable optical protector being switched to its first mode of operation upon reception of the reset signal (that is typically received from the optical line terminal), it is advantageously possible that the switching of the optical protection element, back to its first mode of operation (once it has been switched to its second mode of operation), is able to be performed under the control (directly or indirectly) of the optical line terminal.
Furthermore, by means of the variable optical protector being switched to its first mode of operation upon detecting, by the variable optical protector of the optical protection element, the absence of an inappropriate input signal or any inappropriate input signals, it is advantageously possible according to such an embodiment of the present invention that a shutdown situation or service interruption of at least a part of the optical distribution network (i.e. a situation where - due to the variable optical protector being switched, in the second step, to its second mode of operation - there is, at least partly, a service interruption within the optical distribution network) is able to be reduced by the variable optical protector being switched autonomously (i.e. by the optical protection element itself) to its first mode of operation. Especially, the variable optical protector is configured to be switched to its first mode of operation after a time interval of absence of any inappropriate input signals has elapsed; especially such an autonomously controlled unblocking of the variable optical protector (i.e. switching to the first mode of operation) is controlled, or triggered, by the optical power detector, by means of applying a time interval of absence of any inappropriate input signals; i.e. after such a time interval where no inappropriate input signals at all have been detected by the optical power detector, the variable optical protector is switched back to its first mode of operation. Especially, the optical power detector might be configured such that a property - especially the overall power and/or its overall energy - of the received, or detected, inappropriate input signal determines, or at least influences or modifies, the duration of the time interval required to elapse (without any inappropriate input signals being detected by the optical power detector) before (in the third step), the variable optical protector is triggered to be switched to its first mode of operation; especially, the duration of the time interval required to elapse might be longer, the more power and/or energy the (previously received, or detected) inappropriate input signal has been detected to have. Additionally, the manner of the autonomously controlled unblocking of the variable optical protector (i.e. switching to its first mode of operation) might be configured by the optical line terminal (directly or indirectly), especially by means of the optical protection element receiving a configuration signal, wherein the optical protection element infers, from the configuration signal, the manner how the autonomously controlled unblocking of the variable optical protector shall occur.

Furthermore, it is advantageously possible and preferred according to the present invention that the optical protection element is configured to receive - while the second mode of operation of the variable optical protector being activated or operational - the reset signal via a protection management detector on the first side of the optical protection element.

It is thereby advantageously possible that the optical protection element is able to be switched in its first mode of operation by means of receiving a reset signal, especially a reset signal sent by, or initiated by, the optical line terminal.

Furthermore, it is advantageously possible and preferred according to the present invention that the optical protection element is arranged to provide a transmission window between the first and second side of the optical protection element, wherein the transmission window is arranged such that a communication between the first side of the optical protection element and devices on the second side of the optical protection element is enabled.

Thereby, it is advantageously possible to easily and effectively implement the inventive method.

Especially regarding the optical protection element being arranged to provide a transmission window in downlink direction (i.e. between the optical line terminal and at least one of the optical network terminals), it is advantageously possible and preferred - according to a first group of embodiments of the present invention - that the second mode of operation of the variable optical protector corresponds to blocking or attenuating most of the optical spectrum operatively used within the optical distribution network, and wherein the transmission window is arranged as a specific non-blocking (or transmitting) spectral range.
It is thereby especially advantageously possible that a signal - especially a reset signal that is intended, or sent, for resetting a different optical protection element - in the specific non-blocking spectral range can pass the variable optical protector.
Especially - and again in view of providing the possibility that a signal in the specific non-blocking spectral range can pass the variable optical protector-, the blocking or the attenuating in the second mode of operation of the variable optical protector is realized in a permanent manner.

Furthermore especially regarding the optical protection element being arranged to provide a transmission window in downlink direction (i.e. between the optical line terminal and at least one of the optical network terminals), it is advantageously possible and preferred - according to a second group of embodiments of the present invention - that the second mode of operation of the variable optical protector corresponds to blocking or attenuating for at least one time period, and wherein the transmission window is arranged as at least one specific non-blocking (or transmitting) time window (or non-blocking time interval).
It is thereby especially advantageously possible that the average energy passing the variable optical protector (especially the energy passing in uplink direction) within a reference time period (that comprises the non-blocking time interval but that also comprises (precedingly or subsequently to the non-blocking time interval) at least one blocking time interval) is below a safety threshold value.
Especially - and again in view of the average energy (that is passing the variable optical protector within a reference time period) being below a safety threshold value -, the blocking or the attenuating in the second mode of operation of the variable optical protector is realized regarding the optical spectrum - especially all of the optical spectrum - that is operatively used within the optical distribution network.

According to both the first and second group of embodiments of the present invention, it is, thus, advantageously possible to provide, at a considered optical protection element, a transmission window, in downlink direction in order to allow for a signal - especially a reset signal - to be transmitted, by the optical line terminal, towards an optical protection element that is located in downlink direction from the perspective of the considered optical protection element. As discussed, the transmission window might be a purely spectrally defined transmission window (i.e. which is static in time), or a purely temporally defined transmission window (i.e. that opens or closes the entire relevant optical spectral range), or, alternatively, a combination of both, i.e. in the second mode of operation of the variable optical protector, only a part of the available spectral range is non-blocking and only for a certain time interval.

According to a further preferred embodiment of the present invention, the variable optical protector comprises a bi-stable, switchable element wherein the first mode of operation is realized by means of the switchable element being switched in order to allow the transmission of optical signals between the two sides of the optical protection element, and wherein the second mode of operation is realized by means of the switchable element being switched in order to at least heavily attenuate optical signals between the two sides of the optical protection element,
wherein the switchable element is a hinged mirror element and/or an electronic ink element, the electronic ink element especially having either a reflecting state or an absorptive state,
wherein especially optical signals are reflected more than once using an electronic ink element.

It is thereby advantageously possible to comparatively easily, efficiently and flexibly realize the protection functionality in a manner adapted to the location of the optical protection element.

Furthermore, it is advantageously possible and preferred according to the present invention that the variable optical protector comprises a wavelength demultiplexing element and a wavelength multiplexing element, wherein an incoming optical signal is first demultiplexed, then reflected or attenuated by the switchable element, and finally multiplexed,
wherein especially the wavelength demultiplexing and multiplexing elements are realized by means of or comprising at least one out of the following:
-- arrayed waveguide gratings
-- prisms
-- Bragg-filter,
-- resonator filter,
-- interferometer filter.

Thereby, it is advantageously possible to easily and effectively implement the inventive method.

According to a further embodiment of the present invention, the optical distribution network is, or corresponds to a passive optical network tree, especially comprising, besides the specific splitter entity, at least a further splitter entity, wherein each splitter entity is assigned, by means of its topological location within the passive optical network tree, (either) to a first splitter layer or to at least a second splitter layer, wherein the optical distribution network connects the optical line terminal to a single splitter entity constituting the first splitter layer and wherein the optical distribution network then connects the splitter entity of the first splitter layer to one or to a plurality of splitter entities of the second splitter layer,
wherein especially additional optical network terminals are connected, by the optical distribution network, to splitter entities at the first splitter layer and/or the second or further splitter layers,
wherein, in addition to the specific splitter entity comprising the optical protection element, the further splitter entity comprises a further optical protection element, wherein each of the optical protection element and the further optical protection element are arranged to provide a respective transmission window in downlink direction from the optical line terminal, wherein such transmission windows are arranged or configured such that a communication from the optical line terminal towards devices behind - from the perspective of the optical line terminal - the optical protection element and/or the further optical protection element is enabled, wherein the transmission windows are either overlapping or disjoint, especially regarding a transmission spectral range and/or regarding a transmission time interval.

Thereby, it is advantageously possible to combine a strong possibility to protect the optical distribution network and its components with the possibility to selectively provide reset signals to optical protection elements that are located - from the perspective of the optical line terminal - behind the optical protection element and/or the further optical protection element; it is thus possible that the reset signal (sent by the optical line terminal) is able to traverse at least one splitter layer (with its associated optical protection element(s)) - even though such optical protection element(s) are in their second mode of operation (i.e. generally (besides their respective transmission window(s)) blocking, and this typically both in uplink and in downlink direction). The implementation of disjoint transmission windows significantly increases the network's resilience against attacks and disturbances. By ensuring that each layer of optical protection elements has a unique transmission window, it becomes impossible for an attacker to successfully penetrate multiple layers of protection. Additionally, disjoint transmission windows minimize the risk of widespread network disruption. Since each layer operates independently, a disturbance or attack affecting one layer is less likely to propagate through the entire network, thereby containing potential damage and maintaining service continuity for unaffected segments. Furthermore, this approach allows for more granular control and management of the network. Network operators can precisely target and address issues at specific layers without impacting the entire system, leading to more efficient troubleshooting and maintenance. Overall, the use of disjoint transmission windows enhances the robustness, security, and manageability of optical fiber telecommunication networks.

Furthermore, the present invention relates to an optical protection element for being operated and/or for protecting an optical distribution network, especially an optical distribution network as part of a telecommunications network,
wherein the optical protection element is configured to protect the optical distribution network on a first side of the optical protection element, at least in part, from inappropriate input signals arriving from a second side, opposite the first side, of the optical protection element, wherein inappropriate input signals comprise optical signals having an optical input power exceeding a threshold value and/or optical signals outside of a predefined optical spectral range,
wherein the optical protection element comprises an optical power detector on the second side of the optical protection element as well as a variable optical protector being configured to be switched between at least a first and a second mode of operation, the first mode of operation being a transmission mode of operation allowing the transmission of optical signals for the optical distribution network being operatively used, and the second mode of operation being an optical protection mode of operation,
wherein, in order to operate the optical protection element and/or to protect the optical distribution network from inappropriate input signals, the optical protection element is configured such that:
   -- while the variable optical protector is in its first mode of operation, the optical power detector detects an inappropriate input signal, resulting in the variable optical protector being switched to its second mode of operation, and
   -- while in its second mode of operation, the variable optical protector is able to be triggered to be switched to its first mode of operation.

Furthermore, it is preferred, especially with respect to the optical protection element, that
-- the variable optical protector comprises a bi-stable, switchable element wherein the first mode of operation is realized by means of the switchable element being switched in order to allow the transmission of optical signals between the two sides of the optical protection element, and wherein the second mode of operation is realized by means of the switchable element being switched in order to at least heavily attenuate optical signals between the two sides of the optical protection element,
   wherein the switchable element is a hinged mirror element and/or an electronic ink element, the electronic ink element especially having either a reflecting state or an absorptive state,
   wherein especially optical signals are reflected more than once using an electronic ink element, and that
-- the variable optical protector comprises a wavelength demultiplexing element and a wavelength multiplexing element, wherein an incoming optical signal is first demultiplexed, then reflected or attenuated by the switchable element, and finally multiplexed,
wherein especially the wavelength demultiplexing and multiplexing elements are realized by means of or comprising at least one out of the following:
-- arrayed waveguide gratings
-- prisms
-- Bragg-filter,
-- resonator filter,
-- interferometer filter.

Furthermore, the present invention relates to an optical distribution network comprising an optical protection element according to the present invention.

Still additionally, the present invention relates to a variable optical protector as part of an optical protection element according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

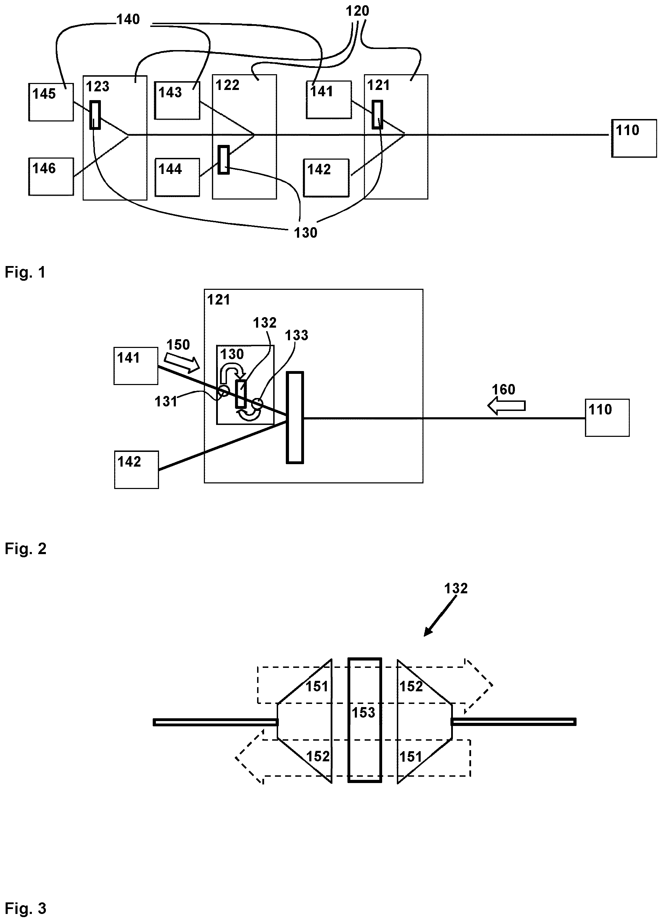

Figure 1 schematically shows exemplarily an optical distribution network according to the present invention for being operated as part of a telecommunications network, wherein the optical distribution network is able to be protected by means of an optical protection element, wherein the optical distribution network especially comprises an optical line terminal, at least one optical splitter entity, and a plurality of optical network terminals.
Figure 2 schematically and specifically shows - in greater detail - a part of the optical distribution network comprising the optical protection element, wherein the optical protection element is configured to protect the optical distribution network on a first (uplink-oriented or uplink-facing) side of the optical protection element, at least in part, from inappropriate input signals arriving from a second (downlink-oriented or downlink-facing) side, opposite the first side, of the optical protection element,
   the optical protection element comprising at least an optical power detector on the second side of the optical protection element as well as a variable optical protector being configured to be switched between at least a first and a second mode of operation, the first mode of operation being a transmission mode of operation allowing the transmission of optical signals in view of the optical distribution network being operatively used, and the second mode of operation being an optical protection mode of operation preventing, at least partly, the transmission of optical signals arriving from the second side of the optical protection element,
   wherein the optical protection element is exemplarily represented as being part of a splitter entity that is connected to a plurality of optical network terminals.
Figure 3 schematically shows in greater detail the variable optical protector as part of the optical protection element and comprising the switchable element, wherein the variable optical protector comprises a wavelength demultiplexing element and a wavelength multiplexing element, wherein an incoming optical signal is first demultiplexed, then reflected or attenuated by the switchable element, and finally multiplexed again.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order; this is especially the case for the terms "first step", "second step", etc. It is to be understood that the terms so used are interchangeable under appropriate circumstances and that the embodiments of the invention described herein are capable of operation in other sequences than described or illustrated herein.

In Figure 1, an optical distribution network 100 is represented for being operated as part of a telecommunications network (not specifically represented and designated by means of a reference sign). According to the present invention, the optical distribution network 100 - especially a passive optical network (PON) - is able to be protected by means of an optical protection element 130, wherein the optical distribution network especially comprises an optical line terminal 110, at least one optical splitter entity, and a plurality of optical network terminals; specifically, Figure 1 exemplarily shows a first splitter entity 121, a second splitter entity 122 and a third splitter entity 123, as well as, exemplarily, a first, second, third, fourth, fifth and sixth optical network terminal 141, 142, 143, 144, 145, 146, which are, collectively, designated by means of reference sign 140 and referred to as a plurality of optical network terminals 140. Additionally, a plurality of optical protection elements - designated, in Figure 1, by means of reference sign 130 - are also shown as being part of the optical distribution network 100, especially as part of respective splitter entities 121, 122, 123.

As is visible from the exemplary representation of an inventive optical distribution network represented by Figure 1, the optical distribution network 100 is exemplarily able to provide a connection between the optical line terminal 110 and the first splitter entity 121 as well as a connection between the first splitter entity 121 and both of the first optical network terminal 141 and the second optical network terminal 142. However, Figure 1 only shows an example of an optical distribution network 100 according to the present invention; other topologies thereof (compared to the one represented in Figure 1) are also possible according to the present invention.

Especially in case that the network provider or network operator of the telecommunications network, and especially of the optical distribution network 100, is not able (or not allowed) to control which kind of optical network terminal (or which type thereof) an end-user or a subscriber uses, the optical distribution network 100 and its components, especially the splitter entities 121, 122, 123 and/or the optical line terminal 110, is or are at risk of being damaged or disturbed by inappropriate input signals fed into the optical distribution network 100 (in uplink direction) by one of the plurality of optical network terminals 140, such input signals, thus, arriving, at a considered optical protection element 130, from its second (i.e. downlink-oriented or downlink-facing) side.

According to the present invention, it is advantageously possible to prevent damages and/or disturbances that result from such inappropriate input signals being fed into the optical distribution network 100. In addition thereto, it is furthermore advantageously possible according to the present invention - especially by means of realizing the optical protection element 130 using a variable optical protector 132 comprising a specifically adapted set of a wavelength demultiplexing element 151, a wavelength multiplexing element 152, and a switchable element 153 (cf. Figure 3) - that this protection (or prevention of damage and/or disturbance) is possible without generating too much of collateral damage, i.e. damage or inconvenience to other customers or end-users that also use the considered optical distribution network 100, e.g. caused by shutting down the optical distribution network 100 entirely, or at least parts thereof that are much larger than necessarily required. Thus, the at least one optical protection element 130 is positioned between the optical line terminal 110 and at least one of the optical network terminals 141, 142.

This is schematically shown in Figure 2, which represents a part of the optical distribution network 100 and specifically shows a part of the optical distribution network 100 comprising the optical protection element 130 (or a considered optical protection element 130), wherein the optical protection element 130 is configured to protect the optical distribution network 100 on a first (uplink-oriented or uplink-facing) side of the optical protection element 130, at least in part, from inappropriate input signals arriving from a second (downlink-oriented or downlink-facing) side, opposite the first side, of the optical protection element 130.
According to the present invention the optical protection element comprises at least an optical power detector 131 on the second side of the optical protection element 130 as well as a variable optical protector 132, and a protection management detector 133. The variable optical protector 132 is configured to be switched between at least a first and a second mode of operation, the first mode of operation being a transmission mode of operation allowing the transmission of optical signals in view of the optical distribution network 100 being operatively used, and the second mode of operation being an optical protection mode of operation preventing, at least partly, the transmission of optical signals 150 arriving from the second side of the optical protection element 130. According to the exemplary representation of Figure 2, the optical protection element 130 is represented as being part of a splitter entity 121 that is connected to a plurality of optical network terminals 141, 142; the splitter entity 121 comprises the optical protection element 130 at least regarding its connection to the first connected optical network terminal 141. It is to be understood that the presentation of Figure 2 is only meant to schematically and exemplarily show the situation in an optical distribution network 100 according to the present invention. In contrast to what is shown in Figure 2, the splitter entity 121 could comprise the optical protection element 130 at each one of its connections towards connected optical network terminals 141, 142, and the optical protection element 130 could also be located (neither shown in Figure 2) on the uplink side of the splitter entity 121 (i.e. at its connection towards the optical line terminal 110).

Hence the protection of the optical distribution network 100 and of its components is possible, according to the present invention, by means of the optical distribution network 100 comprising at least one optical protection element 130 that is positioned between the optical line terminal 110 and at least one of the optical network terminals 141, 142 (specifically, according to Figure 2, the first optical network terminal 141) - i.e. the optical protection element 130 is configured to protect the optical distribution network 100) (being located on the first side of the optical protection element 130) from inappropriate input signals 150 arriving from the second side, opposite to the first side of the optical protection element 130 - and the optical protection element 130 is configured to protect the optical distribution network 100, at least in part, from inappropriate input signals 150 being fed (in the example represented in Figure 2) by the first optical network terminal 141.

Such inappropriate input signals 150 especially correspond to optical signals having an optical input power exceeding a threshold value and/or optical signals outside of a predefined optical spectral range.

In order to be able to provide the afore-mentioned protection, the optical protection element 130 comprises an optical power detector 131 and a variable optical protector 132 as exemplarily shown in Figure 2. According to the present invention, the variable optical protector 132 is configured to be switched between at least a first and a second mode of operation: the first mode of operation is a transmission mode of operation that allows the transmission of optical signals (typically both in uplink direction and in downlink direction), at least for optical signals for which the optical distribution network 100 is operatively used, and the second mode of operation being an optical protection mode of operation in which an optical signal - especially an optical signal provided to the variable optical protector 132 from its downlink side (i.e. also from the downlink side of the optical protection element 130) - is at least attenuated (and at least partly so, i.e. regarding, if applicable, a specific spectral range), if it is not completely blocked, by the variable optical protector 132. Hence, the variable optical protector 132 might also be called a variable optical attenuator as it is able to at least attenuate an optical signal that is arriving from the downlink side of the optical protection element 130.

According to the present invention, in order to operate and to protect the optical distribution network 100 from inappropriate input signals 150 from the first and/or the second optical network terminal 141, 142, the following happens:
While the variable optical protector 132 is in its first mode of operation, the optical power detector 131 (of the considered optical protection element 130) detects an inappropriate input signal 150 (otherwise the optical protection element 130 would simply stay or be operated according to its first mode of operation). In this case, i.e. upon detection of an inappropriate input signal 150, the variable optical protector 132 is switched to its second mode of operation, corresponding to the optical distribution network 100 being protected. In case that the input signal is no longer inappropriate (or there is no optical input power at all being fed, at the downlink side of the considered optical protection element 130, to the optical distribution network 100), i.e. in case that the conditions are fulfilled that the variable optical protector 132 can be safely switched to its first mode of operation, this is able to be realized according to different possibilities or implementations.
According to one such possibility or implementation, in case that the conditions are fulfilled that the variable optical protector 132 can be safely switched to its first mode of operation, this is realized by means of a reset signal 160 received by the optical protection element 130 from its uplink side (or direction) - i.e. in such an implementation, the variable optical protector 132 is configured to be switched to its first mode of operation upon reception, by the optical protection element 130, of the reset signal 160 received from the optical line terminal 110, or at least from the direction of the optical line terminal 110 (typically after the optical line terminal 110 having received a signal or an indication - typically from the optical protection element 130, and there especially from the optical power detector 131 - that an anormal (or, inappropriate) situation no longer applies at the considered optical protection element 130). Especially - and as exemplarily represented in Figure 2 -, the optical protection element 130 comprises the protection management detector 133 that receives (or is able to receive) the reset signal 160. Upon reception of the reset signal 160, by the protection management detector 133, the variable optical protector 132 - and especially its switchable element 153 (cf. Figure 3) - is caused to switch towards its first mode of operation (or, at least, to a mode of operation that is less restricted regarding the transmission of optical signals coming from the second side of the optical protection element 130.
However, according to other such possibilities or implementations, in case that the conditions are fulfilled that the variable optical protector 132 can be safely switched to its first mode of operation, this might also be triggered autonomously by the optical protection element 130 itself, especially by means of the optical power detector 131 controlling, or triggering, the variable optical protector 132 to be switched in its first mode of operation (in case that the mentioned conditions are fulfilled). Especially, the variable optical protector 132 is configured to be switched (and/or the optical power detector 131 is configured to cause, or trigger, the variable optical protector 132 to switch) to its first mode of operation after a time interval of absence of any inappropriate input signals has elapsed. Especially, the optical power detector might be configured, by means of a configuration signal and being received (directly or indirectly) from the optical line terminal 110, in different kinds of configuration states. One such configuration state might correspond to switching off the autonomous control of the unblocking of the variable optical protector 132, thus (in such a configuration state) requiring the reset signal 160 received (directly or indirectly) from the optical line terminal 110.

According to the present invention, the autonomous triggering of the variable optical protector 132 to its first mode of operation - by the optical protection element 130 itself - might be, e.g., realized according to the following different embodiments or combinations thereof:
According to a first exemplary embodiment of an autonomous triggering mechanism of the variable optical protector 132, the optical power detector 131 might comprise a fiber coupler element (e.g. based on fused biconical tapered (FBT) technology) by means of which a comparatively small part (of the total optical power; e.g. in the range of between roughly 0,1% and 5%, especially around 1% or a couple of percentage points) of the uplink optical signal (typically fed by an optical network terminal ONT towards the optical distribution network 100) is branched off. Especially by means of a photodiode, the branched-off optical signal is used to generate a current that charges a capacitor that is able to be discharged through a resistor, thereby reducing the voltage across the capacitor. In case this voltage is below a certain threshold voltage (e.g. detected by means of using an operational amplifier or another circuit means implementing a switching behavior as a function of the voltage across the capacitor), this (autonomously) triggers the variable optical protector 132 to exit its second mode of operation and, especially, to switch to its first mode of operation.
According to a second exemplary embodiment of an autonomous triggering mechanism of the variable optical protector 132, the optical power detector 131 also comprises a fiber coupler element by means of which, again, a comparatively small part of the uplink optical signal is branched off. Again, especially a photodiode is used to provide a voltage that interacts with a piezo element that mechanically interacts with, e.g., a spring element such as to act on a (mechanical) switch element that (autonomously) triggers the variable optical protector 132 to exit its second mode of operation and, especially, to switch to its first mode of operation.

In case that the topology of the optical distribution network 110 and of its components is such that there are optical protection elements only on one single layer (i.e. in a topological situation where it is excluded (or avoided) that an optical protection element is topologically located, within the optical distribution network 100, 'behind' (from the perspective of the optical line terminal 110), i.e. downstream of, another optical protection element), each optical protection element is directly accessible by the optical line terminal 110, hence the reset signal 160 (being typically provided by the optical line terminal 110) is able to be directly received by each optical protection element.

However, in case that this condition is not fulfilled, i.e. in case that the topology of the optical distribution network 110 and of its components is such that there are optical protection elements on different layers (i.e. a further optical protection element is topologically located, within the optical distribution network 100, 'behind' (from the perspective of the optical line terminal 110), i.e. downstream, of an optical protection element), the present invention advantageously provides for the possibility that a reset signal 160 is able to be received (not only by the optical protection element(s) on the first topological layer but also) by optical protection elements of further (second, third, etc.) topological layers of the optical distribution network 110.
This is advantageously realized, according to the present invention, by means of the optical protection element 130 (being located on a higher topological layer of the optical distribution network 110) being arranged to provide a transmission window between the optical line terminal 110 and at least one of the optical network terminals 141, 142 (and, hence, also towards optical protection elements on topologically lower layers) such that the transmission window is arranged to enable a communication between the optical line terminal 110 and devices (especially the optical protection elements on lower layers) behind the optical protection element 130 (from the perspective of the optical line terminal).

In this respect, different implementations are possible according to the present invention:
-- The transmission windows might either be overlapping (especially regarding a transmission spectral range (i.e. having, as (spectral) transmission windows, spectral ranges that, at least partly, overlap) and/or regarding a transmission time interval (i.e. having, as temporal transmission windows, time intervals that, at least partly, overlap)); in such a situation, it is straightforwardly possible - using the overlapping part of the transmission windows - to transmit a signal (especially a reset signal) through both the first and second splitter layers towards devices behind, from the perspective of the optical line terminal 110, these optical protection elements.
-- Alternatively, the transmission windows might be disjoint, again especially regarding a transmission spectral range and/or regarding a transmission time interval; in such a situation, the reset signal can only indirectly be received from the optical line terminal 110, and the optical protection elements on different layers are configured such that a device behind (from the perspective of the optical line terminal 110) the two (or more) layers of optical protection elements is able to be reached (by an initial reset signal from the optical line terminal 110) even though the transmission windows of the two upper layers of optical protection elements are disjoint; e.g. the optical protection elements in the cascade communicate with each other and are controlled accordingly.

In case of overlapping transmission windows (of two (or more) higher layers of optical protection elements), especially all such (higher layer) optical protection elements have the same narrow (spectral and/or temporal) pass window (same frequency or narrow frequency band and/or same time interval); even though a comparatively high level of protection is able to be realized as a narrow spectral or temporal transmission window is difficult for an attacker to guess and/or to hit. Due to the overlapping transmission windows, it is advantageously possible that all optical protection elements (especially those on higher layers) are able to be controlled from the optical line terminal 110 via the optical channel provided by the same narrow pass (spectral and/or temporal) transmission window (hence, the entire management of the optical protection elements can be carried out centrally from the optical line terminal 110). Especially, it is possible according to the present invention that the spectral and/or temporal transmission window is configured differently between different optical distribution networks 110 (i.e. especially between different passive optical network trees) so that an attacker would need to know the defining parameters of such spectral and/or temporal transmission window. Moreover, it is additionally also possible according to the present invention that-by means of using the optical management channel provided by the same (spectral and/or temporal) transmission window - such (common, or overlapping) transmission window is changed, i.e., in a first point in time, a first spectral and/or temporal transmission window (that is overlapping for all optical protection elements, especially those on higher layers) is configured (and, hence, able to be used) whereas, in a subsequent second point in time, a second spectral and/or temporal transmission window - (spectrally and/or temporally) different from the first spectral and/or temporal transmission window - is configured (and, hence, able to be used) which is, again, overlapping for all optical protection elements, especially those on higher layers.

In case of disjoint transmission windows (of two (or more) higher layers of optical protection elements), especially of all such (higher layer) optical protection elements, an attacker cannot access the entire optical distribution network 110; hence, the advantage thereof is an even enhanced level of security and a smaller width of the disturbance effect.

According to the present invention, it is especially preferred that the management of different optical protection elements - and, in principle, irrespective of whether a plurality of transmission windows on different layers (i.e. cascaded optical protection elements) are overlapping or disjoint - is able to be carried out in a manner such that a reaction to an attack, or a presumed attack, is - as much as possible - adapted to the extent of the attack (or presumed attack). This advantageously provides the possibility to flexibly adapt the reaction to an attack and/or to quickly reset optical protection elements and/or the respective variable optical protectors (to their first mode of operation) if this is safely possible, thereby reducing disturbances of end-users or subscribers using the same optical distribution network 100 having been attacked.

In Figure 3, the variable optical protector 132 as part of the optical protection element 130 and comprising the switchable element 153 is schematically shown. The variable optical protector 132 comprises a wavelength demultiplexing element 151 and a wavelength multiplexing element 152, wherein an incoming optical signal is first demultiplexed, then reflected or attenuated by the switchable element 153, and finally multiplexed again.

This is represented, in Figure 3, by means of two dashed arrows indicating opposing direction of optical signals travelling on the optical fiber of the optical distribution network 100. A first (upper) such arrow is related to, e.g., optical signals travelling in uplink direction (in Figure 3 from left to right). For such uplink optical signals, the left-hand optical element of the variable optical protector 132 acts as the wavelength demultiplexing element 151, and the right-hand optical element of the variable optical protector 132 acts as the wavelength multiplexing element 152. The opposite is true for optical signals travelling in downlink direction (in Figure 3 from right to left - referred to by the second (lower) such arrow): For such downlink optical signals, the right-hand optical element of the variable optical protector 132 acts as the wavelength demultiplexing element 151, and the left-hand optical element of the variable optical protector 132 acts as the wavelength multiplexing element 152.

According to the present invention, the variable optical protector 132 comprises the switchable element 153 between the wavelength demultiplexing element 151 and the wavelength multiplexing element 152. This provides the possibility to switch different wavelengths differently, e.g. it is possible to adaptively configure both the transmission mode of operation as well as the optical protection mode of operation of the variable optical protector 132. Especially, this is realized, according to the present invention, by means of a spatial selection.
For example, the two wavelength demultiplexing and multiplexing elements 151, 152 might be realized as two arrayed waveguide gratings (AWG), which laterally delimit the switchable element 153 like a sandwich. The input arrayed waveguide grating is a demultiplexer (demultiplexing element 151) that transforms spectral information into spatial information (analogous to an optical prism). The output arrayed waveguide grating (multiplexing element 152) does the opposite by acting as a multiplexer (spatial-to-frequency conversion). Instead of arrayed waveguide gratings, other methods can be used, e.g. a prism and/or a Bragg-filter and/or a resonator filter and/or an interferometer filter.
According to the present invention, the switchable element 153 (or the spatially selective layer) is realized in a manner such that it allows to be adaptively configured (i.e. the spatial selection might be changed, or switched - thus, it is not static, but has to react and change its state from selective transmission to selective blocking and vice versa). Nevertheless the switchable element 153 should require only a minimal amount of power for its reconfiguration or switching - i.e. a power saving mode is required. However, the switchable element should be metastable or bistable, i.e. static with as little or no bias current as possible if it is not switched. According to the present invention, especially a reflective layer is used (instead of an absorber), whose reflection can be switched from reflective to absorptive using a pixel matrix (or pixel array), thereby providing a spatial resolution. Different examples to realize such a switchable element 153 is to use so-called electronic ink (being bistable and power-off state when static, resulting in an extremely energy-efficient operation; a small amount of power only being needed to switch the pixels of the electronic ink from reflective to absorbent and vice versa) or micromirrors.

According to a first embodiment of the switchable element 153, the switchable element 153 comprises one or a plurality of mirrors, especially an array of digital micromirrors (e.g. as part of a digital micromirror device) such that different such micromirrors are able to either reflect corresponding wavelengths - incoming from the wavelength demultiplexing element 151 - towards the wavelength multiplexing element 152, and thereby realizing, regarding the respective wavelengths, the transmission mode of operation (i.e. allowing the transmission of the variable optical protector 132). Alternatively, such micromirrors (one thereof or a plurality thereof) might be oriented (or switched) such that a corresponding wavelength (or a plurality thereof) -that is likewise incoming from the wavelength demultiplexing element 151 - is not reflected towards the wavelength multiplexing element 152, and, thus, realizing, regarding the respective wavelengths, the optical protection mode of operation of the variable optical protector 132.
According to a second embodiment of the switchable element 153, the switchable element 153 comprises one or a plurality of electronic ink elements, especially an array of such electronic ink elements. Such electronic ink elements are able to be switched to a reflecting state, or to a non-reflecting state (or an attenuating state). In their reflecting state such electronic ink elements are able to reflect corresponding wavelengths - incoming from the wavelength demultiplexing element 151 - towards the wavelength multiplexing element 152, and thereby realizing, regarding the respective wavelengths, the transmission mode of operation (i.e. allowing the transmission of the variable optical protector 132). Alternatively, in their non-reflecting state such electronic ink elements (one thereof or a plurality thereof) do not reflect an incoming wavelength (or a plurality thereof) but, rather, attenuates it or them, and, thus realizing, regarding the respective wavelengths, the optical protection mode of operation of the variable optical protector 132. Technologies of such electronic ink elements might include Gyricon (randomly dispersed beads, each contained in an oil-filled cavity, that are free to rotate within those cavities; the beads are "bichromal", with hemispheres of different colors, and charged, so they exhibit an electric dipole; when voltage is applied to the surface, the beads are able to be rotated to present the required one colored side), electrophoresis, electrowetting, interferometry, and plasmonics.

## Claims

1. Method for operating an optical protection element (130) and/or for protecting an optical network (100), especially an optical distribution network (100) as part of a telecommunications network, by means of the optical protection element (130),
wherein the optical protection element (130) is configured to protect the optical distribution network (100) on a first side of the optical protection element (130), at least in part, from inappropriate input signals (150) arriving from a second side, opposite the first side, of the optical protection element (130), wherein inappropriate input signals (150) comprise optical signals having an optical input power exceeding a threshold value and/or optical signals outside of a predefined optical spectral range,
wherein the optical protection element (130) comprises an optical power detector (131) on the second side of the optical protection element (130) as well as a variable optical protector (132) being configured to be switched between at least a first and a second mode of operation, the first mode of operation being a transmission mode of operation allowing the transmission of optical signals for the optical distribution network (100) being operatively used, and the second mode of operation being an optical protection mode of operation,
wherein, in order to operate the optical protection element (130) and/or to protect the optical distribution network (100) from inappropriate input signals (150), the method comprises the following steps:
-- in a first step, and while the variable optical protector (132) being in its first mode of operation, the optical power detector (131) detects an inappropriate input signal (150),
-- in a second step, the variable optical protector (132) is switched to its second mode of operation,
-- in a third step, the variable optical protector (132) is triggered to be switched to its first mode of operation.

2. Method according to claim 1, wherein the variable optical protector (132) is triggered to be switched to its first mode of operation by at least one out of the following:
-- upon reception, by the optical protection element (130), of a reset signal (160),
-- after a predetermined time interval or timer having elapsed, wherein especially a timer or time interval information relating to, or indicating, the time interval or the timer being either stored by the optical protection element (130) or received by the optical protection element (130),
-- by means of a signal of the optical power detector (131) indicating the absence of inappropriate input signals (150), especially the absence of inappropriate input signals (150) during at least a predetermined period of time.

3. Method according to one of the preceding claims, wherein the optical protection element (130) is configured to receive - while the second mode of operation of the variable optical protector (132) being activated or operational - the reset signal (160) via a protection management detector (133) on the first side of the optical protection element (130).

4. Method according to one of the preceding claims, wherein the optical protection element (130) is arranged to provide a transmission window between the first and second side of the optical protection element (130), wherein the transmission window is arranged such that a communication between the first side of the optical protection element (130) and devices on the second side of the optical protection element (130) is enabled.

5. Method according to one of the preceding claims, wherein the second mode of operation of the variable optical protector (132) corresponds to blocking or attenuating most of the optical spectrum operatively used within the optical distribution network (100), and wherein the transmission window is arranged as a specific non-blocking spectral range, wherein especially the blocking or the attenuating in the second mode of operation of the variable optical protector (132) is realized in a permanent manner.

6. Method according to one of the preceding claims, wherein the second mode of operation of the variable optical protector (132) corresponds to blocking or attenuating for at least one time period, and wherein the transmission window is arranged as at least one specific non-blocking time window, wherein especially the blocking or the attenuating in the second mode of operation of the variable optical protector (132) is realized regarding the optical spectrum that is operatively used within the optical distribution network (100).

7. Method according to one of the preceding claims, wherein the variable optical protector (132) comprises a bi-stable, switchable element (153) wherein the first mode of operation is realized by means of the switchable element (153) being switched in order to allow the transmission of optical signals between the two sides of the optical protection element (130), and wherein the second mode of operation is realized by means of the switchable element (153) being switched in order to at least heavily attenuate optical signals between the two sides of the optical protection element (130),
wherein the switchable element (153) is a hinged mirror element and/or an electronic ink element, the electronic ink element especially having either a reflecting state or an absorptive state,
wherein especially optical signals are reflected more than once using an electronic ink element.

8. Method according to one of the preceding claims, wherein the variable optical protector (132) comprises a wavelength demultiplexing element (151) and a wavelength multiplexing element (152), wherein an incoming optical signal is first demultiplexed, then reflected or attenuated by the switchable element (153), and finally multiplexed,
wherein especially the wavelength demultiplexing and multiplexing elements (151, 152) are realized by means of or comprising at least one out of the following:
-- arrayed waveguide gratings
-- prisms
-- Bragg-filter,
-- resonator filter,
-- interferometer filter.

9. Optical protection element (130) for being operated and/or for protecting an optical distribution network (100), especially an optical distribution network (100) as part of a telecommunications network,
wherein the optical protection element (130) is configured to protect the optical distribution network (100) on a first side of the optical protection element (130), at least in part, from inappropriate input signals (150) arriving from a second side, opposite the first side, of the optical protection element (130), wherein inappropriate input signals (150) comprise optical signals having an optical input power exceeding a threshold value and/or optical signals outside of a predefined optical spectral range,
wherein the optical protection element (130) comprises an optical power detector (131) on the second side of the optical protection element (130) as well as a variable optical protector (132) being configured to be switched between at least a first and a second mode of operation, the first mode of operation being a transmission mode of operation allowing the transmission of optical signals for the optical distribution network (100) being operatively used, and the second mode of operation being an optical protection mode of operation,
wherein, in order to operate the optical protection element (130) and/or to protect the optical distribution network (100) from inappropriate input signals (150), the optical protection element (130) is configured such that:
-- while the variable optical protector (132) is in its first mode of operation, the optical power detector (131) detects an inappropriate input signal (150), resulting in the variable optical protector (132) being switched to its second mode of operation, and
-- while in its second mode of operation, the variable optical protector (132) is able to be triggered to be switched to its first mode of operation.

10. Optical distribution network (100) comprising an optical protection element (130) according to claim 9.

11. Variable optical protector (132) as part of an optical protection element (130) according to claim 9.
